# EUROPÄISCHE PATENTANMELDUNG

(11) **EP 2 055 167 A1**
(43) Veröffentlichungstag der Anmeldung: **06.05.2009**
(21) Anmeldenummer: 08018689.3
(22) Anmeldetag: 24.10.2008
(51) Int. Cl.: A01C 7/20

(54) **Sämaschine**

(30) Priorität: 30.10.2007 DE 102007051703
(71) Anmelder: Amazonen-Werke H. Dreyer GmbH & Co. KG, 49205 Hasbergen (DE)
(72) Erfinder: Johannaber, Stefan Jan, 49536 Lienen (DE); Wiebusch, Thorsten, 49205 Hasbergen (DE)

(57) **Zusammenfassung**

Sämaschine mit einem Rahmen (1), der zumindest einen quer zur Fahrtrichtung verlaufenden und um seine Längsachse mittels eines vorzugsweise motorischen Stellelementes verdrehbaren, mehrkantigen als Querbalken ausgebildeten Scharbalken (3) aufweist, wobei an dem Scharbalken (3) mittels Gummilagerung die Schararme (6) der Säschare (7) in aufrechter Ebene schwenkbar angelenkt sind, wobei an dem Rahmen (1) jeweils mittels eines Anlenkarmes (9) zumindest ein die Sämaschine auf dem Boden abstützendes Tragrad (10) der Sämaschine mittels einer Befestigungsträgeranordnung angeordnet ist, wobei durch das Verdrehen des Scharbalkens (3) mit den Säscharen diese die Arbeitsposition absenkbar und in die Außerbetriebsposition anhebbar sowie der Schardruck der Säschare einstellbar ist. Um hier mit einfachen Mitteln sicher zu stellen, dass in jedem Falle ein ausreichender Bodenkontakt, um einen sicheren Antrieb der Dosierorgane über die Antriebsräder, auch beim Einsatz der Maschine auf relativ hartem Boden, bei welchem die Säschare (7) mit einem relativ hohen Schardruck beaufschlagt werden müssen, um in den Boden einzudringen, erhalten bleibt, ist vorgesehen, dass der Anlenkarm des Tragrades ebenfalls mittels einer Gummilagerung an dem Scharbalken (3), an dem die Säschare (7) angelenkt sind, angelenkt ist.

## Beschreibung

Die Erfindung betrifft eine Sämaschine gemäß des Oberbegriffes des Patentanspruches 1.

Eine derartige Sämaschine ist durch die DE 10 2005 010 740 A1 bekannt. Bei dieser Sämaschine ist der Scharbalken, an dem die Schararme der Säschare mittels einer Gummilagerung befestigt sind, um seine Längsachse verdrehbar, um die Säschare aus dem Boden herauszuheben und in Richtung des Bodens abzusenken. Aufgrund der Gummilagerung, mit dem die Schararme an dem Scharbalken befestigt sind, kann ein entsprechender Schardruck auf die Säschare in Richtung des Bodens aufgegeben werden. Aufgrund der Gummilagerung sind die Säschare in der Lage, in federnder Weise der Bodenoberfläche zu folgen. Der Anlenkarm des Antriebsrades ist mittels eines Gelenkes an dem Rahmen der Sämaschine angeordnet. Üblicher Weise stützen sich die Rahmen derartiger Sämaschinen auf Tragrädern, deren Anlenkarm starr am Rahmen der Sämaschine befestigt sind, ab. Bei dem Einsatz der Sämaschine auf relativ harten Böden kann es dazu kommen, dass das Gewicht der Sämaschine von den Säscharen getragen wird und die Antriebsräder keinen oder keinen ausreichenden Bodenkontakt haben, um einen sicheren Antrieb der Dosierorgane zu gewährleisten.

Der Erfindung liegt die Aufgabe zugrunde, hier mit einfachen Mitteln sicher zu stellen, dass in jedem Falle ein ausreichender Bodenkontakt, um einen sicheren Antrieb der Dosierorgane über die Antriebsräder, auch beim Einsatz der Maschine auf relativ hartem Boden, bei welchem die Säschare mit einem relativ hohen Schardruck beaufschlagt werden müssen, um in den Boden einzudringen, erhalten bleibt.

Diese Aufgabe wird erfindungsgemäß durch das kennzeichnende Merkmal des Patentanspruches 1 gelöst. Infolge dieser Maßnahme wird durch die Anordnung des Anlenkarmes des Tragrades mit einer Gummilagerung an dem Scharbalken sichergestellt ist, dass der Anlenkarm mit dem Tragrad ausreichend gegen den Boden gedrückt wird und auch bei harten und unebenen Böden aufgrund der Federmöglichkeit eine sicherer und gleichmäßiger Antrieb der Dosierorgane durch das Antriebsrad gewährleistet ist.

Damit beim Ausheben der Sämaschine das Antriebsrad nicht zu weit nach unten schwingt und andererseits auch bei sehr hohem Schardruck und hohem auf das Antriebsrad einwirkenden Druck das Antriebsrad nicht zu weit nach oben ausschwingt, ist erfindungsgemäß vorgesehen, dass zwischen dem jeweiligen Anlenkarm und dem Rahmen den Schwenkbereich des Anlenkarmes mit dem Tragrad nach oben und unten begrenzende Anschläge angeordnet sind.

Um ein elastisches Abfedern des Tragarmes beim Schwingen des Tragarmes gegenüber dem Rahmen nach oben zu erreichen, ist vorgesehen, dass der den Schwenkbereich nach oben begrenzende Anschlag als elastisches Pufferelement ausgebildet ist.

Eine vorteilhafte Ausgestaltung des Tragrades ergibt sich dadurch, dass das jeweilige Tragrad einen mit Luftdruck beaufschlagbaren Gummireifen aufweist.

Um eine gleichmäßige Tiefenführung der Säschare zu gewährleisten, ist vorgesehen, dass die Schare mit einem zusätzlichen Gelenkarm an dem Rahmen angeordnet sind, dass die jeweiligen Schararme und Gelenkarme, mit dem die Säschare angelenkt sind, eine Parallelogrammanordnung bilden.

Weitere Einzelheiten der Erfindung sind den übrigen Unteransprüchen, der Beispielsbeschreibung und den Zeichnungen zu entnehmen. Hierbei zeigen
- Fig. 1: die Sämaschine in Teilansicht und perspektivischer Darstellung,

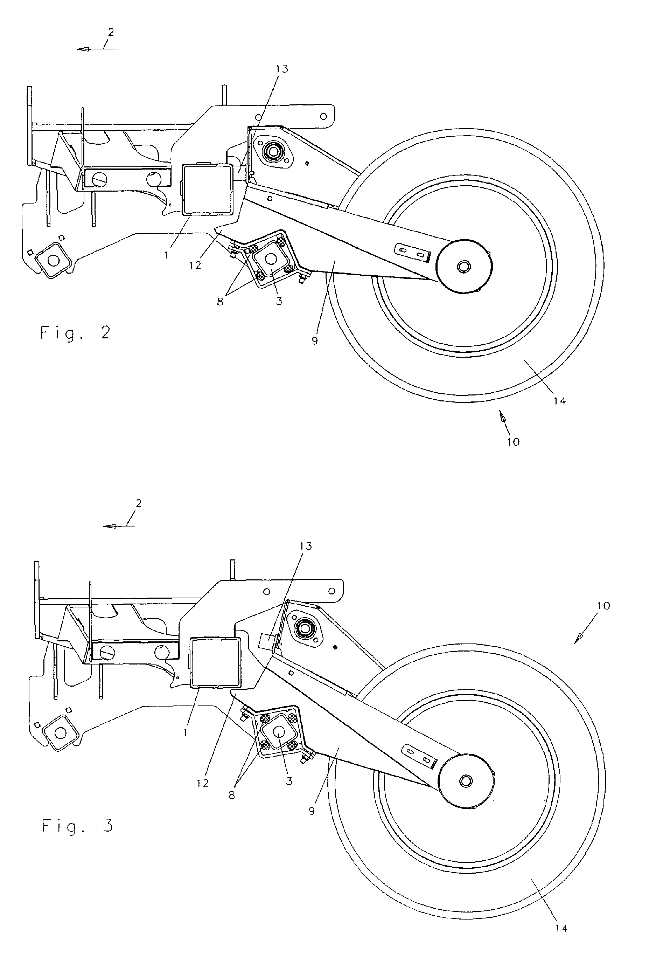

- Fig. 2: die Anordnung des Tragrades in der höchst möglichen Position in der Ansicht II - II,
- Fig. 3: die Anordnung des Tragrades in der niedrigst möglichen Position in der Ansicht II - II und
- Fig. 4: die Anordnung der Säschare in der Ansicht IV-IV.

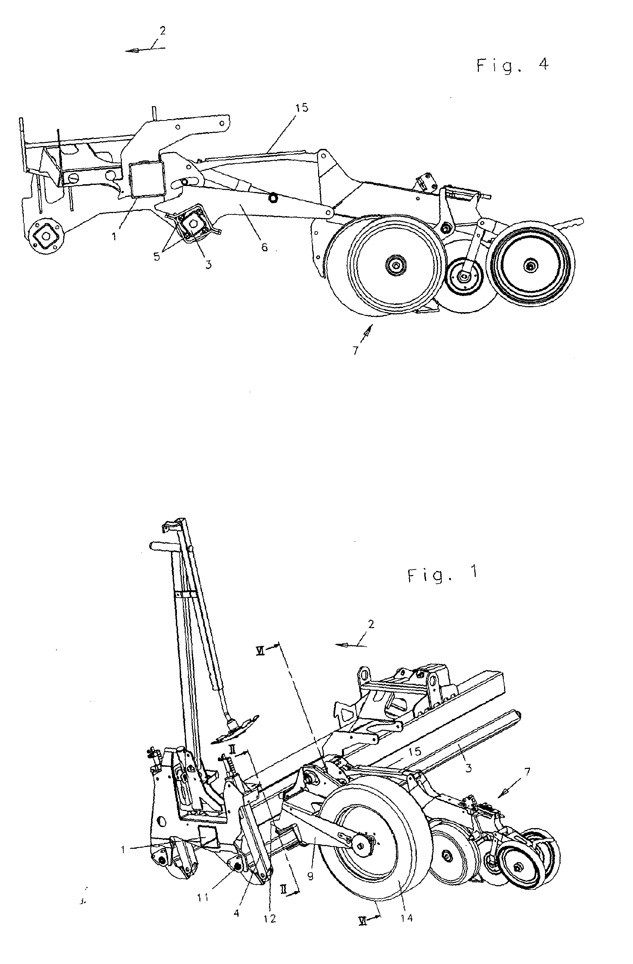

Die Sämaschine weist einen Rahmen 1 auf, an dem ein nicht dargestellter Vorratsbehälter mit Dosierorganen angeordnet ist. An dem Rahmen 1 ist ein quer zur Fahrtrichtung 2 verlaufender und um seine Längsachse verdrehbar gelagerter mehrkantiger, als Querbalken ausgebildeter Scharbalken 3 angeordnet. Der Querbalken 3 ist mittels eines Stellelementes 4, welches auch als motorisches Stellelement ausgebildet sein kann um seine Längsachse verdrehbar. An dem Scharbalken 3 sind mittels Gummilagerung 5 die unteren Schararme 6 mehrere beabstandet zueinander angeordnet Säschare 7 in aufrechter Ebene schwenkbar angelenkt. Gemäß Fig. 1 ist aus Gründen der Übersichtlichkeit nur ein Säschar 7 dargestellt. Des weiteren sind an dem Scharbalken 3 mittels Gummilagerung 8 die Anlenkarme 9 von Tragrädern 10, von denen nur eines dargestellt ist, angeordnet, über die sich die Sämaschine abstützt. Zwischen der Lagerung 8 des Anlenkarmes 9 des Tragrades 10 und der Drehlagerung 11, mit der der Scharbalken 3 an dem Rahmen 1 angeordnet ist, kann auch ein nicht dargestelltes Säschar 7 mittels Gummilagerung 5 angeordnet werden. Der Anlenkarm 9 des Tragrades 10 ist mittels einer Befestigungsträgeranordnung an dem Scharbalken 3, die eine Gummilagerung 8 aufweist angeordnet. Durch Verdrehen des Scharbalkens 3 mit den Säscharen 7 können diese in eine Arbeitsposition abgesenkt und in einer Außerbetriebsposition angehoben werden. Gleichzeitig mit dem Anheben der Säschare 7 oder Absenken der Säschare 7 durch Verdrehen des Scharbalkens 3 wird auch das jeweilige Tragrad 10 mit angehoben oder abgesenkt.

Durch entsprechendes Verdrehen des Scharbalkens 3 lässt sich der Schardruck der Säschare 7, mit den die Säschare 7 in den Boden hineingedrückt werden, einstellen.

Wie erwähnt ist auch der Anlenkarm 9 des Tragrades 10 ebenfalls mit einer Gummilagerung 8 an dem Scharbalken 3, an dem die Säschare angelenkt sind, angelenkt. Hierdurch wird sichergestellt, dass auch auf harten Böden, wenn die Säschare 7 mit hohen Schardruck in den Boden hineingedrückt werden, auch das Tragrad 10 gegen den Boden gedrückt wird, so dass ein ausreichend sicherer Antrieb des Tragrades 10, wenn es gleichzeitig über eine nicht dargestellte Übertragungsvorrichtung die Dosierorgane der Sämaschine antreibt.

Um zu verhindern, wenn die Sämaschine vom Boden abgehoben wird, dass das Tragrad 10 aufgrund seiner Gummilagerung 8 an dem Scharbalken 3 zu weit nach unten durchfällt, ist zwischen dem Anlenkarm 9 und dem Rahmen 1 ein im Schwenkbereich des Anlenkarmes 9 mit dem Tragrad 10 nach unten begrenzender Anschlag 12 angeordnet. Um weiterhin zu verhindern, dass der Rahmen 1 der Sämaschine aufgrund der Gummilagerung 8 des Anlenkarmes 9 des Tragrades 10 an dem Scharbalken 3 zu weit nach unten abgesenkt wird ist zwischen dem Anlenkarm 9 und dem Rahmen 1 ein den Schwenkbereich des Anlenkarmes 9 mit dem Tragrad 10 nach oben begrenzender Anschlag 13, der als elastisches Pufferelement ausgebildet ist, angeordnet.

Das Tragrad 10 weist einen mit Luftdruck beaufschlagbaren Gummireifen 14 auf, so dass das Tragrad 10 über den Gummireifen 14 gleichzeitig abgefedert wird. Weiterhin wird hierdurch eine gute Antriebsverbindung zwischen Boden und Antriebsrad 10 erreicht.

Die Schare 7 sind mit einem zusätzlichen Gelenkarm 15 an dem Rahmen 1 der Sämaschine angeordnet. Die jeweiligen Schararme 6 und 14, mit denen die Schare 5 angelenkt sind, bilden somit eine Parallelogrammanordnung.

Des weiteren können in nicht dargestellter Weise einstellbare Anschlagelemente zur Einstellung und/oder Begrenzung des Verdrehwinkels des Scharbalkens vorgesehen sein.

## Patentansprüche

1. Sämaschine mit einem Rahmen, der zumindest einen quer zur Fahrtrichtung verlaufenden und um seine Längsachse mittels eines vorzugsweise motorischen Stellelementes verdrehbaren, mehrkantigen als Querbalken ausgebildeten Scharbalken aufweist, wobei an dem Scharbalken mittels Gummilagerung die Schararme der Säschare in aufrechter Ebene schwenkbar angelenkt sind, wobei an dem Rahmen jeweils mittels eines Anlenkarmes zumindest ein die Sämaschine auf dem Boden abstützendes Tragrad der Sämaschine mittels einer Befestigungsträgeranordnung angeordnet ist, wobei durch das Verdrehen des Scharbalkens mit den Säscharen diese die Arbeitsposition absenkbar und in die Außerbetriebsposition anhebbar sowie der Schardruck der Säschare einstellbar ist, **dadurch gekennzeichnet, dass** der Anlenkarm (9) des Tragrades (10) ebenfalls mittels einer Gummilagerung (8) an dem Scharbalken (3), an dem die Säschare (7) angelenkt sind, angelenkt ist.

2. Sämaschine nach Anspruch 1, **dadurch gekennzeichnet, dass** zwischen dem jeweiligen Anlenkarm (9) und dem Rahmen (1) den Schwenkbereich des Anlenkarmes (9) mit dem Tragrad (10) nach oben und unten begrenzende Anschläge (12, 13) angeordnet sind.

3. Sämaschine nach Anspruch 2, **dadurch gekennzeichnet, dass** der den Schwenkbereich nach oben begrenzende Anschlag (13) als elastisches Pufferelement ausgebildet ist.

4. Sämaschine nach Anspruch 1, **dadurch gekennzeichnet, dass** zumindest eines der Tragräder (10) gleichzeitig das Antriebsrad der Dosiereinrichtung der Sämaschine bildet.

5. Sämaschine nach einem oder mehreren der vorstehenden Ansprüche, **dadurch gekennzeichnet, dass** das jeweilige Tragrad (10) einen mit Luftdruck beaufschlagbaren Gummireifen (14) aufweist.

6. Sämaschine nach Anspruch 1, **dadurch gekennzeichnet, dass** die Schare (7) mit einem zusätzlichen Gelenkarm (15) an dem Rahmen (1) angeordnet sind, dass die jeweiligen Schararme (6) und Gelenkarme (15), mit dem die Säschare (7) angelenkt sind, eine Parallelogrammanordnung bilden.

7. Sämaschine nach Anspruch 1, **dadurch gekennzeichnet, dass** einstellbare Anschlagelemente zur Einstellung und/oder Begrenzung des Verdrehwinkels des Scharbalkens vorgesehen sind.
